# EUROPÄISCHE PATENTSCHRIFT

(11) **EP 0 584 704 B1**
(45) Veröffentlichungstag und Bekanntmachung des Hinweises auf die Patenterteilung: **27.09.1995**
(21) Anmeldenummer: 93113197.3
(22) Anmeldetag: 18.08.1993
(51) Int. Cl.: B62B 3/06, F16F 9/50, B60B 33/04

(54) **Dreiradfahrzeug, insbesondere Flurförderzeug**
Three wheeled vehicle especially a fork lift truck
Véhicule à trois roues en particulier chariot de manutention

(30) Priorität: 22.08.1992 DE 4227954
(43) Veröffentlichungstag der Anmeldung: 02.03.1994
(73) Patentinhaber: Jungheinrich Aktiengesellschaft, 22047 Hamburg (DE)
(72) Erfinder: Buttkereit, Martin, Dipl.-Ing., D-22844 Norderstedt (DE); Ritter, Siegfried, Dipl.-Ing., D-24598 Boostedt (DE); Krenzin, Marcel, Dipl.-Ing., D-22391 Hamburg (DE); Schuster, Paul, D-31275 Lehrte-Sievershausen (DE)
(74) Vertreter: Patentanwälte Hauck, Graalfs, Wehnert, Döring, Siemons

(56) Entgegenhaltungen:
- EP-A- 0 329 504
- DE-B- 1 032 674
- FR-A- 2 155 096
- FR-A- 2 468 475
- GB-A- 853 050
- US-A- 4 796 732

## Beschreibung

Die Erfindung bezieht sich auf ein Dreiradfahrzeug, insbesondere Flurförderzeug, nach dem Oberbegriff des Patentanspruchs 1.

Flurförderzeuge, insbesondere Gabelhubwagen, werden häufig als Dreiradfahrzeuge gebaut in der Weise, daß im Vorderbereich der Gabel ein Radpaar angeordnet ist sowie ein Antriebsrad im hinteren Bereich des Wagens, das meist mittig zwischen den Spuren beider Vorderräder läuft. Hierbei besteht die Gefahr, daß das Fahrzeug im wesentlichen um die Längsachse eine sogenannte Wankbewegung ausführt. Sie beeinträchtigt die Handhabung des Flurförderzeugs und gefährdet unter Umständen das transportierte Gut.

Es ist bekannt, im Bereich des Einzelrades, zum Beispiel des Antriebsrades, im seitlichen Abstand eine Stützrolle vorzusehen. Liegt das Antriebsrad außermittig, ist lediglich eine Abstützrolle erforderlich; bei mittigem Antriebsrad sind beidseitig des Antriebsrades Stützrollen vorgesehen. Gefederte Stützrollen oder Stützkufen, wenn sie auf gleichem Niveau wie die drei Räder angeordnet sind, übernehmen einen Teil der Stützkraft, was die Traktions- und Bremskraft am Antriebsrad reduziert. Werden die Stützmittel etwas höher angebracht, können sie erst stabilisierend einwirken, wenn bereits eine bestimmte Neigung eingetreten ist. Im übrigen hat sich herausgestellt, daß es auch mit ungefedert aufgehängten Stützrollen oder anderen ungefederten Stützmitteln nicht möglich ist, die Wankbewegung in befriedigendem Maße zu begrenzen.

Aus dem DE-GM 79 30 623 ist bekanntgeworden, einen Lenker für eine Stützrolle über einen Gummipuffer an einem fahrzeugfesten Teil abzustützen. Aus der DE 34 43 835 sind sogenannte Lenkrollen bekanntgeworden, bei denen zwischen dem Lenker und dem Fahrzeug eine Feder angeordnet ist, die eine gewünschte Bodenaufstandskraft für die Stützrolle erzeugt.

Durch die Federung der Stützrollen wird das Fahrzeug zu einem schwingungsfähigen System, das bei bestimmten Betriebsbedingungen zu unerwünschten Schwingungen angeregt werden kann. Wie bereits erwähnt, neigen insbesondere deichselgeführte Niederhubwagen bei der Fahrt ohne oder mit nur geringer Last zu den erwähnten Wankbewegungen, welche durch federnd gelagerte Stützrollen nicht nur nicht verhindert werden können, sondern eher noch verstärkt werden.

Es ist auch bekannt, zwischen zwei federnden Stützrollen zusätzliche mechanische, hydraulische oder hydropneumatische federnde Elemente so vorzusehen, daß der Einfederweg auf der einen Seite des Fahrzeugs auf die andere Seite übertragen wird, um eine Nivellierung bewerkstelligen.

Alle bekannten Systeme gehen davon aus, daß eine Kippbewegung bereits mehr oder weniger eingeleitet ist und das um die Längsachse schwingende Fahrzeug so beeinflußt wird, daß es nach einiger Zeit wieder ruhig geradeaus fährt. Die mit den bekannten Systemen erzielten Ergebnisse sind jedoch nicht zufriedenstellend. Außerdem werden die Antriebs- und Bremskräfte durch an den Stützrädern wirkende Federkräfte reduziert.

Der Erfindung liegt daher die Aufgabe zugrunde, ein Dreiradfahrzeug, insbesondere Flurförderzeug, zu schaffen, bei dem Wankbewegungen wirksam unterbunden werden.

Diese Aufgabe wird erfindungsgemäß gelöst durch die Merkmale des Patentanspruchs 1.

Bei der Erfindung sind die Abstützmittel ledich über ein im wesentlichen ungefedertes Dämpfungselement, das zum Beispiel ein hydraulischer Stoßdämpfer sein kann, am Fahrzeugrahmen abgestützt. Erfindungswesentlich ist ferner, daß das Dämpfungselement eine relativ steile Arbeitskennlinie hat und eine weitgehend unbehinderte Entspannungskennlinie aufweist. Mit anderen Worten, bei einer stoßweisen Anregung wird einer Auslenkung des Dämpfungselements ein hoher Widerstand entgegengesetzt, und das Dämpfungselement gibt erst dann wesentlich nach, wenn die Belastung fortdauert. Durch den hohen Widerstand wird ein Schwingen oder Aufschaukeln verhindert. In entgegengesetzter Richtung (Entspannungsrichtung) erhält das Stützmittel ständig Bodenkontakt oder wird relativ rasch in Bodenkontakt zurückgebracht, sollte es durch eine Kippbewegung vorübergehend vom Untergrund abgehoben worden sein. Hierfür kann auch eine relativ schwache Rückstellfeder eingesetzt werden, welche die Rückkehr der abgehobenen Rolle beschleunigt. Die Feder dient nicht dazu, das Fahrzeug aus seiner Neigung wieder aufzurichten, sondern nur dazu, den Bodenkontakt der Rolle wieder herzustellen.

Der Erfindung liegt die Überlegung zugrunde, daß ein Dreiradfahrzeug an sich statisch bestimmt ist und grundsätzlich stabiles Fahrverhalten aufweist und daß Stützkräfte gegen Wankbewegungen nur dann wirken müssen, wenn äußere dynamische Einflüsse ein Moment um die Längsachse erzeugen. Bei einer statischen Belastung gibt das Dämpfungselement ohne weiteres nach und entfaltet mithin keine stabilisierende oder Abstützwirkung, auch nicht bei Verwendung einer Rückstellfeder. Durch die erfindungsgemäße Maßnahme wird außerdem das Entstehen falsch gerichteter Kräfte, wie das Vorspannen der Stützrollenfedern, die ein Wanken unterstützen, vermieden. Mit Hilfe der Erfindung wird mithin wirksam jede Wankbewegung unterbunden, ohne daß die Radnormalkräfte an den drei Fahrwerkrädern verringert würden. Denn das erfindungsgemäße Dämpfungssystem arbeitet vorzugsweise mit aperiodischer Dämpfung, d.h. eine Auslenkung zu einer Seite führt nicht zu einem Überschwingen auf die andere. Vielmehr wird eine optimale Traktion beibehalten ebenso wie eine maximale Bremswirkung.

Die Erfindung wird nachfolgend anhand von Zeichnungen näher erläutert.
- Fig. 1: zeigt schematisch die Seitenansicht eines deichselgeführten Niederhubwagens.
- Fig. 2: zeigt perspektivisch den unteren Teil des Niederhubwagens nach Fig. 1 mit zwei Stützrollen.
- Fig. 3: zeigt schematisch Draufsicht und Rückansicht eines herkömmlichen Niederhubwagens.
- Fig. 4: zeigt äußerst schematisch die Rückansicht eines erfindungsgemäßen Niederhubwagens.
- Fig. 5: zeigt schematisch den Aufbau eines Dämpfungselements für die Stützrollen eines Niederhubwagens.
- Fig. 6: zeigt schematisch eine erste Ausführungsform einer als Lenkrolle ausgebildeten Stützrolle mit erfindungsgemäßem Dämpfungselement.
- Fig. 7: zeigt schematisch eine zweite Ausführungsform einer Lenkrolle mit erfindungsgemäßem Dämpfungselement.
- Fig. 8: zeigt verschiedene Dämpfungskurven für einen Stoßdämpfer.

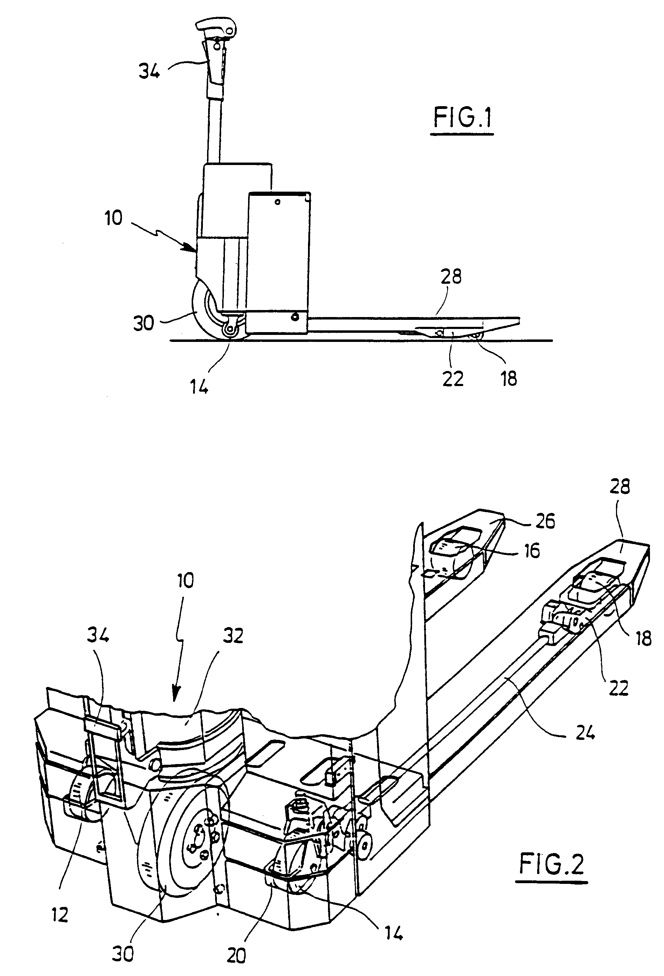

Der Aufbau eines Niederhub-Gabelhubwagens 10 nach den Figuren 1 und 2 ist allgemein bekannt. Er soll daher nicht im einzelnen erläutert werden. Er weist vier Rollen 12, 14, 16 und 18 auf, von denen die ersten beiden als Stützrollen mittels einer Rollengabel um eine horizontale Achse kippbar und um eine vertikale Achse drehbar angeordnet sind. Das Kippen wird durch ein nicht gezeigtes Dämpfungselement gedämpft, worauf weiter unten noch eingegangen wird. Die anderen Rollen 16, 18 sind in einer Schwinge 22 gelagert, die mit Hilfe einer Steuerstange 24 verschwenkt werden kann, um die Gabelarme 26, 28 in bekannter Weise anzuheben. Zwischen den Stützrollen 12, 14 ist ein Antriebsrad 30 von einem bei 32 angeordneten Motor angetrieben. Außerdem kann das Antriebsrad 30 mit Hilfe einer Deichsel 34 verschwenkt werden, die zudem Bedienorgane für das Anheben und Ansenken der Gabelarme 26, 28 und dem Antriebsmotor 32 enthält.

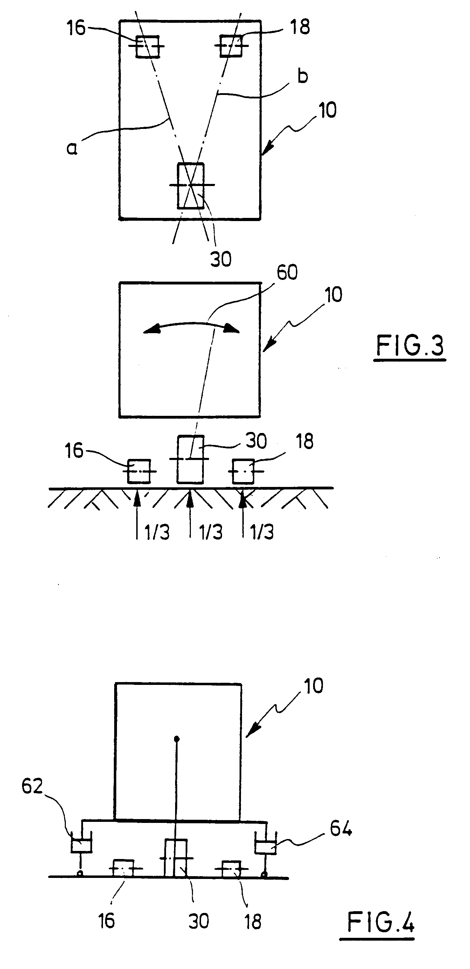

Fig. 3 zeigt die Draufsicht und die Rückansicht des Gabelhubwagens 10 nach den Figuren 1 und 2 ohne die Stützrollen 12, 14. Man erkennt, daß sehr leicht ein Kippmoment um die Achsen a bzw. b auftreten kann je nach Lastverteilung und unbalancierter Krafteinwirkung. Die Achsen a, b erstrecken sich jeweils durch eine vordere Rolle 16 bzw. 18 und das Antriebsrad 30. Die Kippneigung ist in der unteren Darstellung durch den Doppelpfeil 60 angedeutet.

Erfolgt jedoch eine seitliche Abstützung des Hubwagens 10 durch Dämpfungselemente 62, 64 auf beiden Seiten des Antriebsrades 30, wird einer plötzlich auftretenden Neigungsbewegung sofort eine entgegengerichtete Kraft entgegengesetzt und die Neigungsbewegung unterbunden. Bei einer statischen Belastung hingegen geben die Dämpfungselemente nach, wobei zum Beispiel das Dämpfungselement 64 einfährt und das Dämpfungselement 62 ausfährt.

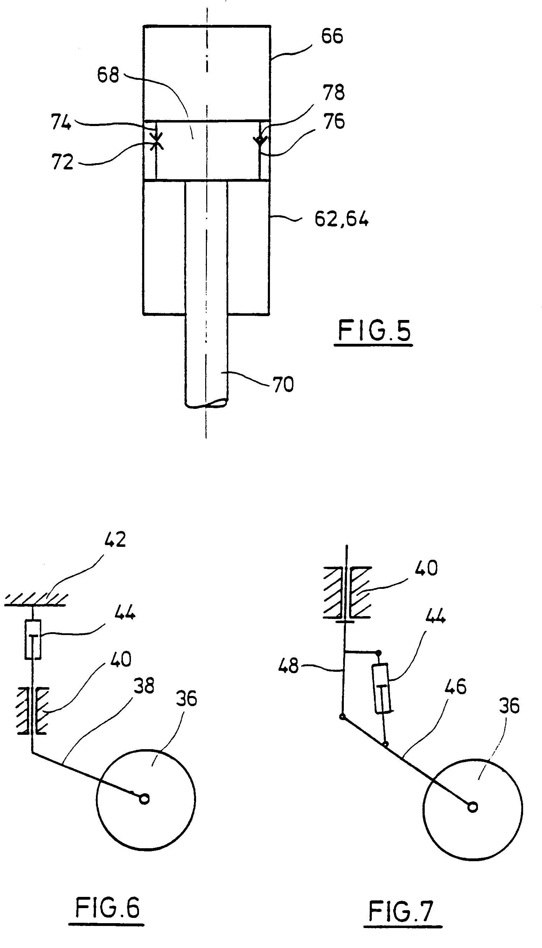

In Fig. 5 ist ein Dämpfungselement 62, 64 schematisch dargestellt. Es umfaßt einen Hydraulikzylinder 66, in dem ein Kolben 68 gleitend bewegbar ist, der mit einer aus dem Zylinder 66 dichtend herausgeführten Kolbenstange 70 verbunden ist. Der Kolben 68 weist eine mit einer Drosselstelle 72 versehene Durchbohrung 74 auf sowie eine weitere Durchbohrung 76 relativ großen Querschnitts, in der ein Rückschlagventil 78 angeordnet ist. Wird der Kolben 68 bei einer stoßweisen Beaufschlagung der Stange 70 in Fig. 5 nach oben bewegt, kann eine Flüssigkeitsströmung nur über die gedrosselte Bohrung 74 stattfinden. Sie ist so ausgeführt, daß der Stoßdämpfer eine ausgesprochen steile Arbeitskennlinie hat. Entfällt hingegen die Druckkraft an der Stange 70, bewegt sich der Kolben mit der Stange und der daranhängenden Stützrolle durch das Eigengewicht relativ rasch nach unten. Dies wird ermöglicht durch den relativ großen Durchströmquerschnitt in der Bohrung 76. Dadurch behalten die Stützräder 12, 14 auch bei Unebenheiten fast immer Bodenkontakt. Für die Normalfahrt ist dies jedoch nicht besonders wichtig. Wesentlich ist nur, daß bei einer plötzlich auftretenden Kippneigung diese sofort gedämpft wird, ohne daß es zu einem Überschwingen zur entgegengesetzten Seite kommt.

In den Figuren 6 und 7 sind zwei Möglichkeiten für den schematischen Aufbau einer Stützrolle mit Dämpfungselement dargestellt. In Fig. 6 ist eine Stützrolle 36 in einer L-förmigen Gabel 38 gelagert, die ihrerseits bei 40 vertikal geführt ist. Die Abstützung der Gabel 38 an einem fahrzeugfesten Widerlager 42 erfolgt über ein Dämpfungselement 44. Bei der Ausführungsform nach Fig. 7 ist ein Dämpfungselement 44 zwischen einer Gabel 46 und einem vertikal geführten Lagerbauteil 48 angeordnet, das im fahrzeugfesten Lager 40 geführt ist. In beiden Fällen entspricht die Arbeitsrichtung der Dämpfungselemente 44 der Druckrichtung. Es versteht sich, daß ein Dämpfungselement auch in Zugrichtung betrieben werden kann durch eine entsprechend anders aufgebaute Kinematik. Die Stützrolle kann auch durch eine Nute oder einen Ritz ersetzt sein.

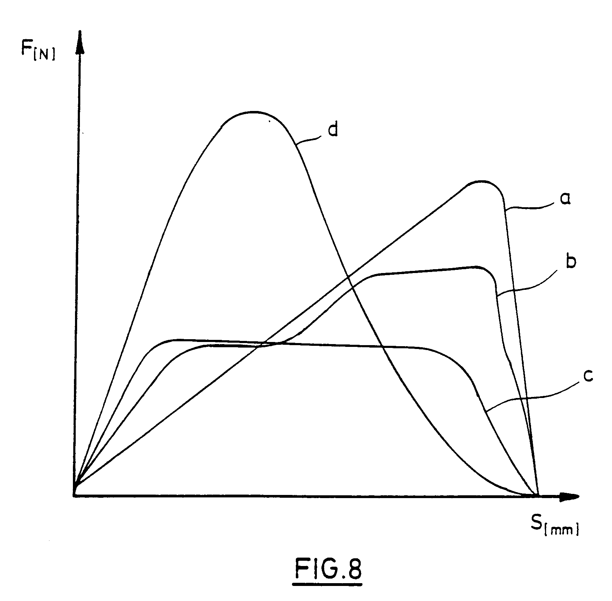

In Fig. 8 ist die Dämpfungskraft in N über den Dämpferhub 5 für verschiedene Anordnungen und Durchmesser der Drosselbohrung(en) dargestellt. Kurve a) zeigt progressives, Kurve b) selbstkompensierendes, Kurve c) lineares und Kurve d) degressives Dämpfungsverhalten. Bei der Erfindung ist im wesentlichen degressives Verhalten erwünscht.

In der vorangehenden Beschreibung wurde exemplarisch nur auf ein Dreiradfahrzeug Bezug genommen, bei dem das Antriebsrad mittig zwischen den vorderen Rollen angeordnet ist. Es versteht sich, daß ein Stützrad mit der erfindungsgemäßen Dämpfung auch bei einem Dreiradfahrzeug eingesetzt werden kann, bei dem das Antriebsrad aus der Mitte heraus versetzt ist, beispielsweise in einer Spur ist mit einem der beiden vorderen Räder.

Der Dämpfer nach Fig. 5 kann auch eine Feder aufweisen (nicht gezeigt), die im Sinne einer Rückstellwirkung nach einer Auslenkung das Rad schneller in Berührung mit dem Boden bringt, sollte es abgehoben haben. Die Feder dient hingegen nicht zu Stabilisierungszwecken; hierfür wäre sie zu schwach. Die aperiodische Dämpfung erfolgt ausschließlich über den Dämpfer selbst. Dieser dient nicht als Abstützung für das Fahrzeug in der Normallage und unter statischen Bedingungen, auch nicht in Verbindung mit einer (schwachen) Feder.

## Patentansprüche

1. Dreiradfahrzeug, insbesondere Flurförderzeug, bei dem die Räder sich im wesentlichen ungefedert auf dem Untergrund abstützen und zu einer oder zu beiden Seiten des Einzelrades ein nachgebendes Abstützmittel angeordnet ist, das einer Neigung des Fahrzeugs um eine durch das Einzelrad und jeweils eines der anderen Räder sich erstreckende Achse entgegenwirkt, dadurch gekennzeichnet, daß das Abstützmittel (12, 20, 36) lediglich über ein im wesentlichen ungefedertes Dämpfungselement (62, 64, 44) abgestützt ist, wobei das Dämpfungselement eine steile Arbeitskennlinie und eine weitgehend unbehinderte Entspannungskennlinie aufweist.

2. Fahrzeug nach Anspruch 1, dadurch gekennzeichnet, daß das Abstützmittel eine Abstützrolle (12, 14, 36) ist.

3. Fahrzeug nach Anspruch 1 oder 2, dadurch gekennzeichnet, daß ein hydraulischer Stoßdämpfer (62, 64) vorgesehen ist, dessen Kolben mindestens eine Durchströmöffnung (74, 76) aufweist, die in Arbeitsrichtung stark gedrosselt und in Entspannungsrichtung einen großen Durchströmquerschnitt bereitstellt.

4. Fahrzeug nach Anspruch 3, dadurch gekennzeichnet, daß eine Rückstellfeder vorgesehen ist derart, daß die Federkraft bei einer Auslenkung im Dämpfungsfall relativ zur Dämpfungskraft vernachlässigbar ist.

5. Fahrzeug nach Anspruch 4, dadurch gekennzeichnet, daß das Dämpfungselement so ausgelegt ist, daß eine aperiodische Dämpfung stattfindet.

## Claims

1. A three-wheeled vehicle, in particular a lift truck, including wheels supported on the ground substantially without resilient means and resilient support means disposed on one or both sides of the single wheel so as to resist any inclination of the vehicle about an axis extending through said single wheel and any of the other wheels, characterized in that said support means (12, 20, 36) is supported on the ground solely via a substantially unsprung damper element (62, 64, 44), which damper element has a steep compression characteristic and a substantially unrestricted expansion characteristic.

2. A vehicle as defined in claim 1 wherein said support means comprises a support roller (12, 14, 36).

3. A vehicle as defined in claim 1 including a hydraulic shock absorber (62, 64) comprising a piston which includes a through flow orifice (74, 76) arranged to be substantially restricted during the compression stroke and being substantially unrestricted during the expansion stroke.

4. A vehicle as defined in claim 3 including return spring means providing spring forces which are negligible with respect to the damping forces during a damping operation.

5. A vehicle as defined in claim 4 wherein the damper element is arranged to provide for an aperiodic damping action.

## Revendications

1. Véhicule à trois roues, en particulier chariot de manutention au sol, dans le cas duquel les roues prennent appui sur le sol, essentiellement sans suspension par ressort, et un moyen d'appui élastique est disposé d'un côté ou des deux côtés de la roue isolée, et s'oppose à l'inclinaison du véhicule autour d'un axe passant par la roue isolée et par chacune des autres roues,
caractérisé en ce que
le moyen d'appui (12, 20, 36) s'appuie purement et simplement au moyen d'un organe amortisseur (62, 64, 44), essentiellement non élastique, qui présente une courbe caractéristique de fonctionnement montant rapidement et une courbe caractéristique de la détente ne présentant largement aucune contrainte.

2. Véhicule suivant la revendication 1, caractérisé en ce que le moyen d'appui est un galet d'appui (12, 14, 36).

3. Véhicule suivant la revendication 1 ou la revendication 2, caractérisé en ce qu'il est prévu un amortisseur hydraulique (62, 64), dont le piston présente au moins une ouverture (74, 76) pour le passage de fluide, qui est fortement étranglée dans le sens de travail et qui offre un grand orifice de passage dans le sens de la détente.

4. Véhicule suivant la revendication 3, caractérisé en ce qu'il est prévu un ressort de rappel, tel que, dans le cas d'un changement de direction la force exercée par le ressort soit négligeable par rapport à la force si l'amortisseur fonctionne.

5. Véhicule suivant la revendication 4, caractérisé en ce que l'organe amortisseur est conçu de façon à produire un amortissement apériodique.
